# EUROPÄISCHE PATENTANMELDUNG

(11) **EP 3 954 596 A1**
(43) Veröffentlichungstag der Anmeldung: **16.02.2022**
(21) Anmeldenummer: 20190763.1
(22) Anmeldetag: 12.08.2020
(51) Int. Cl.: B62D 25/00, B62D 29/00, B60R 13/08, B29C 44/18

(54) **DÄMMELEMENT**

(71) Anmelder: Sika Technology AG, 6340 Baar (CH)
(72) Erfinder: Gasparri, Thomas, 7070 Mignault (BE); Marcq, Dimitri, 1480 Tubize (BE)
(74) Vertreter: Sika Patent Attorneys

(57) **Zusammenfassung**

Ein Verfahren zur Herstellung eines Dämmelementes mit einem Trägerelement und einem expandierbaren Material für die Anwendung in einem Strukturelement eines Fahrzeuges umfasst die Schritte: Herstellen des Trägerelementes durch ein additives Fertigungsverfahren, wobei das Trägerelement eine Nut umfasst, welche einen C- oder U-förmigen Querschnitt hat; und Anbringen des expandierbaren Materials auf das Trägerelement, wobei das expandierbare Material zumindest teilweise in die Nut eingebracht wird.

## Beschreibung

Die Erfindung betrifft ein Dämmelement mit einem Trägerelement und einem expandierbaren Material, insbesondere zur Dämmung eines Strukturelementes mit einem Hohlraum in einem Fahrzeug. Sie betrifft des Weiteren ein System mit einem Strukturelement und einem darin angeordneten Dämmelement, sowie ein Verfahren zur Herstellung eines Dämmelementes.

Vielfach weisen Bauelemente, wie beispielsweise Karosserien und/oder Rahmen von Transport- und Fortbewegungsmitteln, insbesondere von Fahrzeugen zu Wasser oder zu Land oder von Luftfahrzeugen, Strukturen mit Hohlräumen auf, um leichtgewichtige Konstruktionen zu ermöglichen. Diese Hohlräume verursachen jedoch verschiedenste Probleme. Je nach Art des Hohlraumes muss dieser zum Verhindern des Eindringens von Feuchtigkeit und Verschmutzungen, die zur Korrosion der Bauelemente führen können, abgedichtet werden. Oft ist es auch wünschenswert, die Hohlräume und somit das Bauelement wesentlich zu verstärken, jedoch das geringe Gewicht beizubehalten. Oft ist es auch notwendig, die Hohlräume und somit die Bauelemente zu stabilisieren, um Geräusche, die sonst den Hohlraum entlang oder durch diesen hindurch übertragen werden würden, zu reduzieren. Viele dieser Hohlräume weisen eine unregelmässige Form oder ein enges Ausmass auf, wodurch es erschwert wird, sie richtig abzudichten, zu verstärken und zu dämpfen.

Insbesondere im Automobilbau, aber auch im Flugzeug- und Bootsbau, werden deshalb Abdichtungselemente (Englisch: baffle) verwendet, um Hohlräume abzudichten und/ oder akustisch abzuschotten, oder Verstärkungselemente (Englisch: reinforcer) verwendet, um Hohlräume zu verstärken.

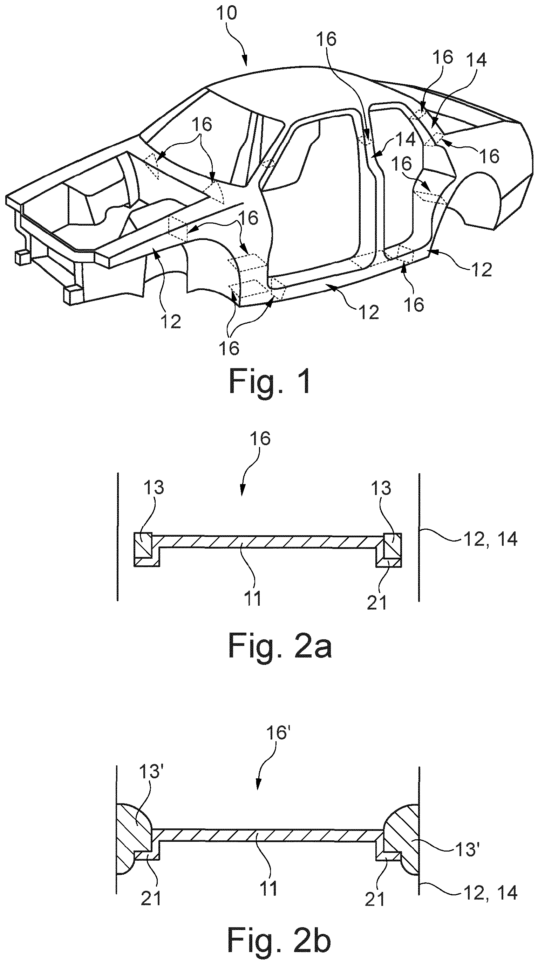

In Fig. 1 ist eine Karosserie eines Automobils schematisch dargestellt. Die Karosserie 10 weist dabei verschiedene Strukturen mit Hohlräumen, wie beispielsweise Säulen 14 und Träger bzw. Verstrebungen 12 auf. Solche Strukturelemente 12, 14 mit Hohlräumen werden üblicherweise mit Abdichtungs- und/oder Verstärkungselementen 16 abgedichtet bzw. verstärkt.

Fig. 2a und 2b zeigen schematisch ein bekanntes Konzept zum abdichtenden und/oder verstärkenden Verschluss von Öffnungen bzw. Hohlräumen in einem Kraftfahrzeug. Dabei zeigt die Fig. 2a ein Dämmelement 16 vor einer Expansion eines expandierbaren Materials 13. Fig. 2b zeigt dasselbe Dämmelement 16, jedoch nach einer Expansion des expandierbaren Materials 13, also mit dem expandierten Material 13'.

Das Dämmelement 16 befindet sich in einem Hohlraum einer Karosseriestruktur, wie sie beispielsweise in Fig. 1 dargestellt ist. Ein Abschnitt eines solchen Strukturelements 12, 14 einer Karosserie ist in den Fig. 2a und 2b schematisch dargestellt. Das Dämmelement 16 umfasst ein Trägerelement 11, welches einen Randbereich 21 hat. Das expandierbare Material 13 ist dabei im Wesentlichen auf diesem Randbereich 21 des Trägerelementes 11 angeordnet.

Vor der Expansion des expandierbaren Materials 13 besteht zwischen dem Dämmelement 16 und dem Strukturelement 12, 14 ein Spalt. Dieser Spalt erlaubt es, das Strukturelement 12, 14 zu beschichten, um einen Korrosionsschutz des Strukturelementes 12, 14 zu erreichen. Nach dieser Beschichtung wird das expandierbare Material 13 üblicherweise durch eine Wärmeeinwirkung expandiert, wobei das expandierte Material 13' dadurch den Spalt zwischen dem Dämmelement 16 und dem Strukturelement 12, 14 schliesst. Zudem wird durch die Expansion des expandierbaren Materials 13 auch zugleich eine Fixierung des Dämmelementes 16' im Strukturelement 12, 14 erreicht. Ein derart im Strukturelement 12, 14 befestigtes Dämmelement 16' verstärkt einerseits das Strukturelement 12, 14 und verschliesst andererseits den Hohlraum im Strukturelement 12, 14.

Nachteilig an solchen Dämmelementen 16 ist es, dass zur Herstellung solcher Dämmelemente 16 grosse Investitionen in entsprechende Werkzeuge notwendig sind.

Dies ist deshalb so, weil herkömmliche Dämmelemente 16 üblicherweise durch ein Spritzgussverfahren, beispielsweise ein Einkomponenten- oder Zweikomponenten-Spritzgussverfahren, hergestellt werden. Zur Herstellung von grossen Stückzahlen ist dieses herkömmliche Spritzgussverfahren wirtschaftlich sinnvoll, weil die hohen Investitionskosten in Werkzeuge kompensiert werden durch sehr niedrige Produktionskosten eines einzelnen Dämmelementes. Zur Herstellung von kleineren Serien verschiebt sich dieses Verhältnis jedoch derart, dass die niedrigen Produktionskosten des einzelnen Dämmelementes die hohen Investitionskosten in Werkzeuge nicht aufwiegen können.

Um dieses Problem zu umgehen, wurden bereits alternative Herstellungsmethoden, wie beispielsweise die Profilextrusion oder ein mehrschichtiges stanzendes Verfahren, vorgeschlagen. Solche alternativen Technologien benötigen zwar keine sehr hohen Investitionskosten in Werkzeuge, sind jedoch limitiert im Hinblick auf die Geometrie des Dämmelementes. Da jedoch die Hohlräume in Fahrzeugen häufig komplexe Formen aufweisen, ist es notwendig, entsprechende komplexe Formen eines Dämmelementes herstellen zu können.

Der Erfindung liegt daher die Aufgabe zugrunde, ein Dämmelement sowie ein Verfahren zur Herstellung eines Dämmelementes der oben erläuterten Art bereitzustellen, welches ohne hohe Investitionskosten in Werkzeuge hergestellt werden kann, und welches erlaubt, auch komplexere dreidimensionale Formen des Dämmelementes zu ermöglichen. Weiterhin soll das Dämmelement bzw. das Verfahren zur Herstellung eines Dämmelementes auf kostengünstige Art und Weise produziert werden können, um auch Serien mit höherer Stückzahl wirtschaftlich effizient produzieren zu können.

Diese Aufgabe wird zunächst gelöst durch ein Verfahren zur Herstellung eines Dämmelementes mit einem Trägerelement und einem expandierbaren Material für die Anwendung in einem Strukturelement eines Fahrzeuges, wobei das Verfahren die Schritte umfasst: Herstellen des Trägerelementes durch ein additives Fertigungsverfahren, wobei das Trägerelement eine Nut umfasst, welche einen C- oder U-förmigen Querschnitt hat, und wobei diese Nut derart ausgerichtet ist, dass deren offene Seite in einem Verwendungszustand des Dämmelementes gegen eine Wand des Strukturelementes ausgerichtet ist; Anbringen des expandierbaren Materials auf das Trägerelement, wobei das expandierbare Material zumindest teilweise in die Nut eingebracht wird.

Die gestellte Aufgabe wird zudem gelöst durch ein Dämmelement zur Dämmung eines Strukturelementes in einem Fahrzeug, das Dämmelement umfassend ein Trägerelement, welches durch ein additives Fertigungsverfahren hergestellt ist, wobei das Trägerelement eine Nut umfasst, welche einen C- oder U-förmigen Querschnitt hat, und wobei diese Nut derart ausgerichtet ist, dass deren offene Seite in einem Verwendungszustand des Dämmelementes gegen eine Wand des Strukturelementes ausgerichtet ist; ein expandierbares Material, welches auf dem Trägerelement angeordnet ist, wobei das expandierbare Material zumindest teilweise in der Nut angeordnet ist.

Des Weiteren wird eingangs erwähnte Aufgabe zudem gelöst durch ein System mit einem Strukturelement und einem darin angeordneten Dämmelement.

Die hier vorgeschlagene Lösung hat den Vorteil, dass durch die Herstellung des Trägerelementes mit einem additiven Fertigungsverfahren keine Investitionskosten in spezifische Werkzeuge (z.B. Spritzgussformen) notwendig sind, um ein neues Dämmelement zu produzieren. Dadurch können beispielsweise seriennahe Prototypen oder aber auch Kleinserien oder mittelgrosse Serienproduktionen auf kostengünstige Art und Weise realisiert werden. Insbesondere werden dabei die hohen Investitionskosten des üblicherweise verwendeten Spritzgussverfahrens umgangen.

Des Weiteren wird durch die hier vorgeschlagene Lösung ermöglicht, eine hohe Variabilität hinsichtlich der Ausgestaltung solcher Dämmelemente und sehr kurze Produktionszyklen zu realisieren. Weiterhin kann eine Ausgestaltung eines Trägerelementes freier ausgewählt werden, da die übrigen Restriktionen des Spritzgussverfahrens (Entformungsproblematik) hier nicht vorliegen. Zudem können kurzfristige Designanpassungen umgehend durch eine Umprogrammierung erfolgen, und es werden keinerlei Anpassungen an der Produktionsinfrastruktur notwendig.

Ein weiterer Vorteil besteht darin, dass Produkte schneller an den Markt gebracht werden können und dass auch einzelne Teile, beispielsweise Ersatzteile, auf Bestellung produziert werden können. Zudem müssen durch die hier vorgeschlagene Lösung keine Spritzgussformen gelagert werden nach einem Ende einer Serienproduktion.

Ein Kerngedanke der vorliegenden Erfindung besteht darin, dass eine Oberfläche des Trägerelementes für diesen Anwendungszweck nicht zwingenderweise feingliedrig gestaltet sein muss.
Beim Trägerelement besteht die Funktion insbesondere in der Positionierung des expandierbaren Materials in einem Strukturelement, sowie auch zur Strukturverstärkung des Gesamtsystems. Beide diese Funktionen können auch mit Trägerelementen sichergestellt werden, welche aus grösseren Bausteinen, insbesondere dickeren Materialsträngen, aufgebaut sind. Somit erweist sich das Verwenden von gedruckten Dämmelementen als besonders vorteilhaft, weil dadurch ein deutlich effizienterer Herstellungsprozess realisierbar ist. Die Nachteile einer gröber gegliederten Oberfläche, wie beispielsweise höhere Fertigungstoleranzen, sind in diesem Anwendungsbereich oftmals bis zu einem gewissen Grad hinnehmbar.

Die Bezeichnung "Dämmelement" umfasst im Zusammenhang mit dieser Erfindung Elemente zur Abschottung und/oder Verstärkung und/oder Dämmung eines Strukturelementes, also insbesondere sowohl die in der Fachsprache genannte "Baffle" als auch die in der Fachsprache genannten "Reinforcer". Die verschiedenen Eigenschaften eines solchen Dämmelementes können dabei einzeln oder aber in Kombination miteinander auftreten.

Die Bezeichnung "additive Fertigung" bzw. "additives Fertigungsverfahren" umfasst im Zusammenhang mit dieser Erfindung insbesondere ein Verfahren bzw. dessen Resultat, welches im Allgemeinen als dreidimensionaler Druck bekannt ist. Dabei werden Materialstränge eines Materials auf ein Auflageelement abgelegt bzw. aufbauend übereinandergelegt. Die Materialstränge sind dabei beispielsweise derart gebildet, dass sie sich nach einem Aneinander- und/oder Übereinanderlegen miteinander verbinden, und ihren ursprünglichen Querschnitt beim Druckvorgang im Wesentlichen beibehalten.

Ein Material zur Bildung des Trägerelmenetes kann verschiedene Materialien umfassen. Bevorzugte Materialien sind Kunststoffe, insbesondere Polyurethane, Polyamide, Polyester und Polyolefine, bevorzugt hochtemperaturbeständige Polymere wie Poly(phenylenether), Polysulfone oder Polyethersulfone. Besonders bevorzugt wird Polyamid, insbesondere Polyamid 6, Polyamid 6,6, Polyamid 11, Polyamid 12 oder ein Gemisch davon verwendet. Auch Kombinationen mit Fasern, wie beispielsweise Glasfasern, Mineralfasern, pflanzliche Fasern, Textilfasern oder Karbonfasern, sind möglich.

Das Drucken dieses Materiales wird vorzugsweise in einer Schmelzschichtung ("fused deposition modeling") durchgeführt. In einer bevorzugten Variante werden Pellets des Materiales zur Bildung der druckbaren Masse eingeschmolzen.

In einer beispielhaften Ausführungsform wird als additive Fertigung ein FDM, oder ein SLS, oder ein SLA, oder ein Clip, oder eine schichtweise Deposition, oder eine Extrusion verwendet.

Als expandierbares Material kann grundsätzlich verschiedenartiges Material eingesetzt werden, welches thermisch zur Schäumung gebracht werden kann. Dieses Material kann dabei Verstärkungseigenschaften aufweisen oder auch nicht.

Ein solches expandierbares Material weist typischerweise ein chemisches oder ein physikalisches Treibmittel auf. Chemische Treibmittel sind organische oder anorganische Verbindungen, welche sich unter Einfluss von Temperatur, Feuchtigkeit, oder elektromagnetischer Strahlung zersetzen, wobei mindestens eines der Zersetzungsprodukte ein Gas ist. Als physikalische Treibmittel können beispielsweise Verbindungen eingesetzt werden, welche bei Erhöhung der Temperatur in den gasförmigen Aggregatszustand übergehen. Dadurch sind sowohl chemische als auch physikalische Treibmittel in der Lage, Schaumstrukturen in Polymeren zu erzeugen.

Bevorzugt wird das expandierbare Material thermisch geschäumt wobei chemische Treibmittel eingesetzt werden. Als chemische Treibmittel eignen sich beispielsweise Azodicarbonamide, Sulfohydrazide, Hydrogencarbonate oder Carbonate.
Geeignete Treibmittel sind beispielsweise auch kommerziell erhältlich unter dem Handelsnamen Expancel^{®} von der Firma Akzo Nobel, Niederlande, oder unter dem Handelsnamen Celogen^{®} von der Firma Chemtura Corp., USA.
Die für die Schäumung erforderliche Wärme kann durch externe oder durch interne Wärmequellen, wie einer exothermen chemischen Reaktion, eingebracht werden. Das schäumbare Material ist vorzugsweise bei einer Temperatur von ≤ 200°C, insbesondere von 120°C bis 190°C, bevorzugt von 160°C bis 180°C, schäumbar.

Als expandierbare Materialien geeignet sind beispielsweise einkomponentige bei Raumtemperatur nicht fliessende Epoxidharzsysteme, welche insbesondere eine erhöhte Schlagzähigkeit aufweisen und Thixotropiermittel wie Aerosile oder Nanoclays enthalten. Beispielsweise weisen derartige Epoxidharzsysteme 20 bis 50 Gew.-% eines Epoxid-Flüssigharzes, 0 bis 30 Gew.-% eines Epoxid-Festharzes, 5 bis 30 Gew.-% Zähigkeitsmodifikatoren, 1 bis 5 Gew.-% physikalische oder chemische Triebmittel, 10 bis 40 Gew.-% Füllstoffe, 1 bis 10 Gew.-% Thixotropiermittel und 2 bis 10 Gew.-% hitzeaktivierbare Härter auf. Als Zähigkeitsmodifikatoren eignen sich reaktive Flüssigkautschuke auf Basis von Nitrilkautschuk oder Derivate von Polyetherpolyol-Polyurethanen, Core-Shell Polymere und ähnliche dem Fachmann bekannte Systeme.

Ebenfalls geeignete expandierbare Materialien sind Treibmittel enthaltende einkomponentige Polyurethanzusammensetzungen, aufgebaut aus kristallinen, OH-Gruppen aufweisenden Polyestern im Gemisch mit weiteren Polyolen, vorzugsweise Polyetherpolyolen, und Polyisocyanaten mit blockierten Isocyanatgruppen. Der Schmelzpunkt des kristallinen Polyesters sollte ≥ 50°C sein. Die Isocyanatgruppen des Polyisocyanats können beispielsweise mit Nucleophilen wie Caprolactam, Phenolen oder Benzoxalonen blockiert sein. Weiterhin eignen sich blockierte Polysocyanate wie sie beispielsweise in der Pulverlacktechnologie zum Einsatz kommen und beispielsweise unter den Handelsnamen Vestagon^{®} BF 1350 und Vestagon^{®} BF 1540 kommerziell erhältlich sind von Degussa GmbH, Deutschland. Als Isocyanate sind ebenfalls so genannte verkapselte oder oberflächendeaktivierte Polyisocyanate, welche dem Fachmann bekannt und beispielsweise beschreiben sind in EP 0 204 970.

Weiterhin eignen sich als expandierbare Materialien Treibmittel enthaltende zweikomponentige Epoxid/Polyurethan-Zusammensetzungen, wie sie beispielsweise beschrieben sind in WO 2005/080524 A1.

Weiterhin eignen sich als expandierbare Materialien Treibmittel enthaltende Ethylen-Vinyl-Acetat-Zusammensetzungen.

Ebenfalls geeignete expandierbare Materialien werden unter dem Handelsnamen SikaBaffle^{®} 240, SikaBaffle^{®} 250 oder SikaBaffle^{®} 255 von der Sika Corp., USA, vertrieben und sind in den Patenten US 5,266,133 und US 5,373,027 beschrieben.

Weiterhin geeignete expandierbare Materialien werden unter den Handelsnamen SikaBaffle^{®}-450, SikaBaffle^{®}-420, SikaBaffle^{®}-250NT, SikaBaffle^{®}-255 und SikaBaffle^{®}-250PB2 von der Sika vertrieben. Solche expandierbare Materialien haben eine Expansionsrate von ungefähr 300 - 3000% und sind für die vorliegende Erfindung besonders bevorzugt.

Als expandierbare Materialien mit Verstärkungseigenschaften sind beispielsweise diejenigen bevorzugt, welche unter dem Handelsnamen SikaReinforcer^{®} 941 von der Sika Corp., USA, vertrieben werden. Diese sind beschrieben in US 6,387,470.

In einer beispielhaften Ausführungsform wird beim Anbringen des expandierbaren Materials auf das Trägerelement das expandierbare Material auf das Trägerelement extrudiert.

In einer beispielhaften Ausführungsform wird das expandierbare Material durch einen Roboter direkt durch die offene Seite der Nut in die Nut hinein appliziert.

In einer beispielhaften Ausführungsform wird beim Extrudieren bzw. beim Applizieren des expandierbaren Materiales das expandierbare Material zumindest teilweise überlappend angeordnet.

Eine solche überlappende Anordnung des expandierbaren Materiales hat den Vorteil, dass dadurch das expandierbare Material besser auf dem Träger bzw. in der Nut gehalten wird.

In einer beispielhaften Ausführungsform besteht ein überlappender Abschnitt aus einem Anfangsbereich und einem Endbereich eines applizierten bzw. extrudierten Stranges des expandierbaren Materiales.

In einer beispielhaften Ausführungsform beträgt eine Länge einer Überlappung zwischen 3 und 30 mm, bevorzugt zwischen 5 und 25 mm, bevorzugt zwischen 5 und 20 mm.

In einer beispielhaften Ausführungsform hat die Nut an einer Stelle einen grösseren Querschnitt, sodass an dieser Stelle das expandierbare Material überlappend in der Nut angeordnet werden kann.

In einem alternativen Ausführungsbeispiel wird das expandierbare Material über eine Einfüllöffnung des Trägerelementes und durch Kanäle im Trägerelement in die Nut hinein appliziert.

In einer beispielhaften Weiterbildung wird das expandierbare Material dabei durch einen Applikationsroboter in die Einfüllöffnung eingebracht.

In einer alternativen Weiterbildung wird das expandierbare Material dabei manuell, beispielsweise durch eine Abfülldose oder durch einen Handextruder, in die Einfüllöffnung eingebracht.

Wie bereits eingangs erwähnt, bietet die additive Fertigung des Trägerelementes den Vorteil, dass dadurch auch Träger hergestellt werden können, welche durch die Restriktionen beim Spritzgussverfahren schwierig oder nicht herstellbar sind. Insbesondere können durch die additive Fertigung ohne Weiteres auch kompliziertere Strukturen in einem Inneren des Trägerelementes realisiert werden, wie beispielsweise Kanäle zur Durchleitung des expandierbaren Materials.

Weiterhin können auch andere Strukturen im Innern des Trägerelementes realisiert werden, wie beispielsweise Rippen zur Verstärkung des Trägerelementes oder aber Strukturen zur Veränderung einer akustischen Dämmung des Trägerelementes.

In einer beispielhaften Ausführungsform wird ein Befestigungselement zur Fixierung des Dämmelementes am Strukturelement am Trägerelement angeordnet, nachdem das expandierbare Material auf dem Trägerelement angebracht worden ist.

Dies hat den Vorteil, dass dadurch zunächst das expandierbare Material in die Nut des Trägerelementes eingebracht werden kann, ohne dass dabei bereits bestehende Befestigungselemente diesen Prozess behindern könnten. Oftmals ist es nämlich so, dass die Befestigungselemente nahe der Nut angeordnet sind. Wird nun das expandierbare Material als Trägerelemente mit bereits vorhandenen Befestigungselementen appliziert, so kann dies die Applikation bzw. das Anbringen des expandierbaren Materials behindern.

In einer beispielhaften Ausführungsform umfasst das Dämmelement ein Befestigungselement zur Fixierung des Dämmelementes am Strukturelement, wobei das Befestigungselement durch ein Spritzgussverfahren hergestellt ist.

Dies hat den Vorteil, dass dadurch ein Befestigungselement mit einer feingliedrigen und präzise gefertigten Oberfläche realisiert werden kann, und wobei gleichzeitig ein Trägerelement durch additive Fertigung hergestellt werden kann mit einer weniger feinen und weniger präzise ausgestalteten Oberfläche. Somit können verschiedene Bereiche des Dämmelementes mit verschiedenen Fertigungsverfahren hergestellt werden, so dass die jeweiligen besonderen Anforderungen erfüllt werden.

In einer beispielhaften Ausführungsform ist die Nut vollständig um das Befestigungselement herum angeordnet, wobei sich die Nut beidseitig des Befestigungselementes verzweigt.

Eine solche Umrundung des Befestigungselementes mit der Nut bzw. mit dem darin angeordneten expandierbaren Material hat den Vorteil, dass ein Bereich um das Befestigungselement besser abgedichtet werden kann.

In einer beispielhaften Ausführungsform ist die Nut im Wesentlichen vollständig um das Trägerelement herum angeordnet.

In einem beispielhaften Ausführungsbeispiel ist die Nut in Bereichen von spitzen Winkeln des Trägerelementes tiefer ausgestaltet als in übrigen Bereichen des Trägerelementes.

Eine solche Ausgestaltung der Nut in spitzen Winkeln des Trägerelementes hat den Vorteil, dass dadurch eine Applikation mit einem Roboter des expandierbaren Materials in die Nut vereinfacht wird. Es kann dadurch verhindert werden, dass ein Nutgrund einen zu starken Richtungswechsel aufweist, welcher für einen Applikationsroboter bei der Anordnung des expandierbaren Materiales schwer nachzuführen ist. Durch die hier vorgeschlagene tiefere Ausgestaltung der Nut wird erreicht, dass die kritischsten Bereiche der Nut in Bezug auf deren Krümmung oder Richtungswechsel entschärft werden können. Somit kann ein Applikationsroboter besser einem Grund der Nut folgen bei der Applikation des expandierbaren Materials.

In einer beispielhaften Ausführungsform ist der C- oder U-förmige Querschnitt der Nut als U-förmiger Querschnitt derart gebildet, dass die offene Seite der Nut vollständig offen ist.

In einer alternativen Ausführungsform ist der C- oder U-förmige Querschnitt der Nut als C-förmiger Querschnitt derart gebildet, dass die offene Seite der Nut teilweise offen ist.

In einer beispielhaften Weiterbildung haben dabei eine obere und/oder eine untere Seitenwand des C-förmigen Querschnittes der Nut einen Fortsatz auf der offenen Seite der Nut, sodass diese offene Seite durch diesen Fortsatz bzw. diese Fortsätze teilweise geschlossen ist.

Solche Fortsätze haben den Vorteil, dass dadurch das expandierbare Material besser in der Nut gehalten wird (vor, während und nach einer Expansion).

In einer beispielhaften Ausführungsform hat das Trägerelement zumindest ein Distanzelement.

Solche Distanzelemente definieren in einem Verwendungszustand des Dämmelementes eine Position bzw. Beabstandung des Dämmelementes relativ zum Strukturelement, indem die Distanzelemente das Dämmelement auf Wänden des Strukturelementes abstützen. Zusammen mit den Befestigungselementen kann so eine vordefinierte Positionierung des Dämmelementes im Strukturelement realisiert werden.

In einer beispielhaften Ausführungsform kommt das zumindest eine Dämmelement der Nut nirgends näher als 10 mm, bevorzugt als 12 mm, bevorzugt als 15 mm, bevorzugt als 17 mm, bevorzugt als 20 mm.

Eine solche Ausgestaltung des Distanzelementes hat den Vorteil, dass dadurch wiederum eine Applikation des expandierbaren Materials auf dem Trägerelement vereinfacht wird, indem Distanzelemente genügend Freiraum um die Nut herum lassen, so dass ein Applikationsroboter entlang der Nut geführt werden kann.

In einer beispielhaften Weiterbildung ist das zumindest eine Distanzelement an einem Ort des Trägerelementes angeordnet, der zumindest 10 mm, bevorzugt zumindest 12 mm, besonders bevorzugt zumindest 15 mm, besonders bevorzugt zumindest 17 mm, besonders bevorzugt zumindest 20 mm von einer Kante der Nut beabstandet ist.

In einer beispielhaften Ausführungsform hat das Trägerelement zumindest ein Manipulationselement, welches so ausgebildet ist, dass ein Roboter das Trägerelement an diesem Manipulationselement auf vordefinierte Weise fassen kann.

Dies ist von Vorteil, weil dadurch eine Anbringung des expandierbaren Materials auf das Trägerelement durch einen Roboter vereinfacht wird.

In einer beispielhaften Weiterbildung ist das Manipulationselement im Wesentlichen zylinderförmig ausgestaltet, wobei ein Querschnitt des Manipulationselementes einen Hinterschnitt aufweisen kann.

In einer beispielhaften Weiterbildung hat das zylinderförmige Manipulationselement eine im Wesentlichen runde oder ovale Grundfläche.

In einer beispielhaften Ausführungsform hat das Trägerelement zumindest zwei Manipulationselemente, und in einer alternativen Ausführungsform hat das Trägerelement zumindest drei Manipulationselemente.

In einer beispielhaften Weiterbildung sind die zumindest zwei bzw. zumindest drei Manipulationselemente auf einer selben Seite des Trägerelementes angeordnet.

Einzelheiten und Vorteile der Erfindung werden im Folgenden anhand von Ausführungsbeispielen und mit Bezug auf schematische Zeichnungen beschrieben. Es zeigen:
- Fig. 1: eine beispielhafte Darstellung einer Karosserie gemäss Stand der Technik;
- Fig. 2a und 2b: schematische Darstellung zur Erläuterung eines beispielhaften Dämmelementes gemäss Stand der Technik;
- Fig. 3a bis 3c: schematische Darstellung eines beispielhaften Dämmelementes;
- Fig. 4a bis 4c: schematische Darstellung eines Befestigungselementes sowie einer Stelle des Dämmelementes zur Anordnung des Befestigungselementes;
- Fig. 5a: schematische Darstellung eines beispielhaften Dämmelementes;
- Fig. 5b: schematische Darstellung von Kanälen im Inneren eines Dämmelementes;
- Fig. 6: schematische Darstellung eines Bereiches eines Dämmelementes, welcher einen spitzen Winkel aufweist; und
- Fig. 7a und 7b: schematische Darstellung eines beispielhaften Verfahrens zur Herstellung eines Dämmelementes.

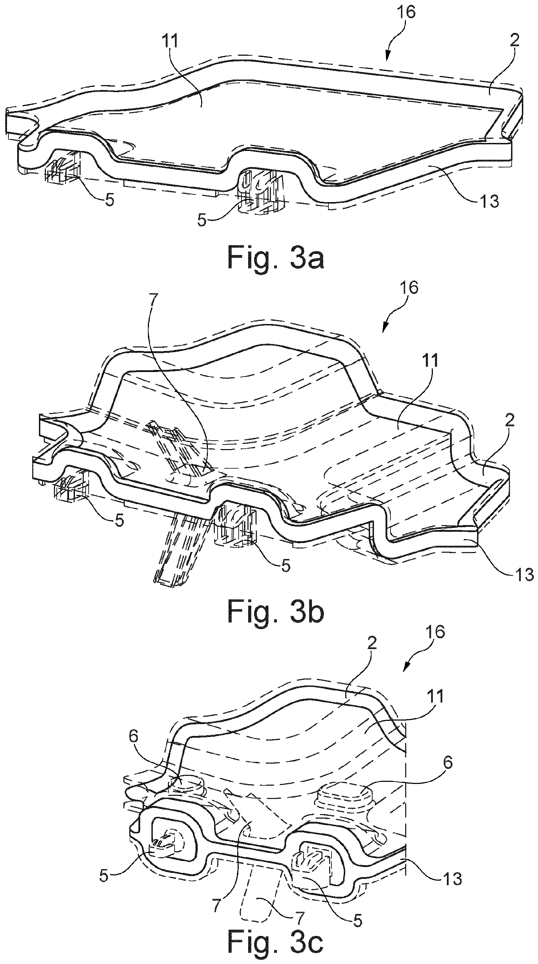

In den Fig. 3a bis 3c sind verschiedene beispielhafte Dämmelemente 16 schematisch dargestellt. Die Dämmelemente 16 weisen jeweils ein Trägerelement 11 und ein darauf angeordnetes expandierbares Material 13 auf. Dabei haben die Trägerelemente eine Nut 2, welche einen C- oder U-förmigen Querschnitt hat, und welche derart ausgerichtet ist, dass deren offene Seite in einem Verwendungszustand des Dämmelementes 16 gegen eine Wand eines Strukturelementes ausgerichtet ist.

Das beispielhafte Dämmelement 16 in Fig. 3a ist im Wesentlichen flächig ausgebildet. Dieses Dämmelement 16 hat zwei Befestigungselemente 5 zur Fixierung des Dämmelementes 16 an einem Strukturelement. In diesem Beispiel sind keine weiteren Elemente zur Positionierung des Dämmelementes 16 im Strukturelement vorgesehen.

In Fig. 3b ist ein weiteres beispielhaftes Dämmelement 16 dargestellt. Dieses Dämmelement 16 hat einen Träger 11, welcher mehrere stufenartige Bereiche umfasst. Wiederum sind zwei Befestigungselemente 5 zur Fixierung des Dämmelementes 16 in einem Strukturelement vorgesehen. Zudem hat das Dämmelement 16 in diesem Ausführungsbeispiel zwei Distanzelemente 7, welche das Dämmelement 16 an Wänden eines Strukturelementes abstützen in einem Verwendungszustand, so dass eine Position bzw. eine Vorfixierung des Dämmelementes 16 in einem Strukturelement verbessert werden kann. Diese Distanzelemente 7 sind dabei von der Nut 2 so weit beabstandet, dass eine Anbringung des expandierbaren Materials auf das Trägerelement 11 bzw. in die Nut 2 hinein nicht zu stark behindert ist.

In Fig. 3c ist ein weiteres beispielhaftes Dämmelement 16 schematisch dargestellt. Dieses Dämmelement 16 umfasst wiederum ein stufenförmiges Trägerelement 11 sowie Distanzelemente 7 und Befestigungselemente 5. Zudem hat dieses Dämmelement 16 zwei Manipulationselemente 6, welche in diesem Beispiel zylinderförmig ausgebildet sind. Dadurch kann bei einer Applikation des expandierbaren Materials 13 auf das Trägerelement 11 das Trägerelement 11 mithilfe dieser Manipulationselemente 6 von einem Roboter auf vordefinierte Art und Weise gefasst bzw. manipuliert werden. Zudem ist in diesem Ausführungsbeispiel die Nut 2 jeweils vollständig um die Befestigungselemente 5 herum angeordnet. Dadurch sind die Befestigungselemente 5 jeweils von einem Kreis aus expandierbarem Material 13 eingeschlossen. Dies ermöglicht eine bessere Abdichtung in Bereichen der Befestigungselemente 5.

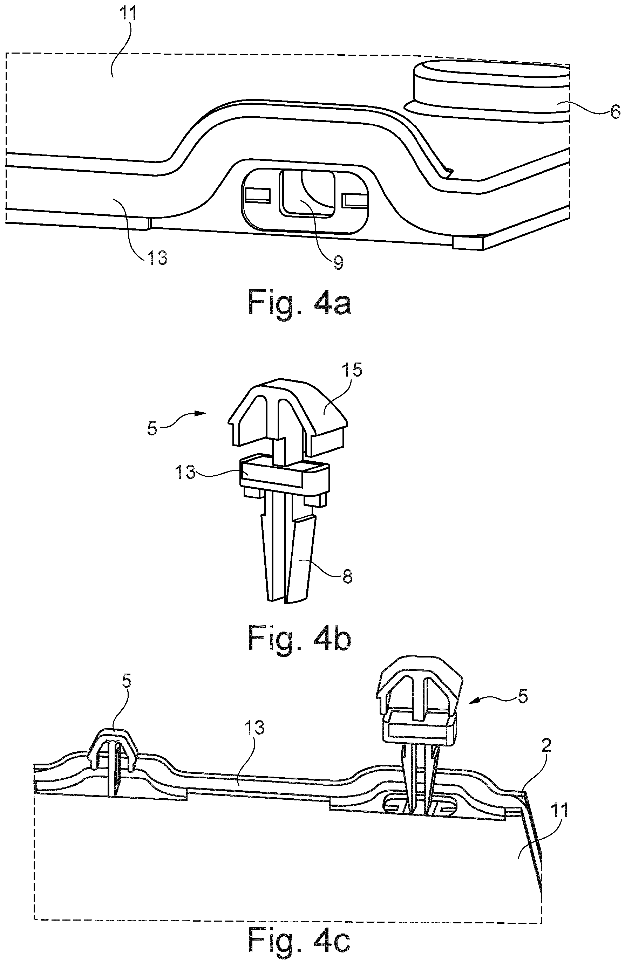

In den Fig. 4a bis 4c ist schematisch und beispielhaft eine Ausführungsvariante hinsichtlich der Befestigungselemente 5 dargestellt. Dabei ist in Fig. 4a ein Ausschnitt aus einem Dämmelement dargestellt. Auf diesem Ausschnitt befindet sich ein zweites Kopplungselement 9. In Fig. 4b ist das Befestigungselement 5 dargestellt. In diesem Ausführungsbeispiel umfasst das Befestigungselement 5 einen Clip 15, einen Bereich mit expandierbarem Material 13, und ein erstes Kopplungselement 8. Dieses erste Kopplungselement 8 des Befestigungselementes 5 kann nun mit dem zweiten Kopplungselement 9 des Trägerelementes 11 gekoppelt werden, so dass Befestigungselement 5 und Trägerelement 11 miteinander mechanisch verbunden sind.

In Fig. 4c ist ein Vorgang dieser Kopplung zwischen Befestigungselement 5 und Trägerelement 11 schematisch dargestellt. Beispielsweise kann das erste Kopplungselement 8 ebenfalls clipartig ausgestaltet sein, und das zweite Kopplungselement kann als entsprechendes Gegenstück ausgestaltet sein, so dass bei einer Einführung des ersten Kopplungselementes 8 in das zweite Kopplungselement 9 der Clip in das Gegenstück einrastet und das Befestigungselement 5 mit dem Trägerelement 11 mechanisch arretiert.

Durch eine solche separate Ausgestaltung des Befestigungselementes 5 und des Trägerelementes 11 wird es ermöglicht, dass einerseits Trägerelement 11 und Befestigungselement 5 durch andere Verfahren bzw. mit anderen Materialien ausgestaltet werden können, und dass andererseits das Befestigungselement 5 erst dann am Trägerelement 11 befestigt werden kann, nachdem das expandierbare Material 13 auf das Trägerelement 11 angebracht wurde. Dadurch wird eine Anbringung des expandierbaren Materials 13 auf das Trägerelement 11 vereinfacht.

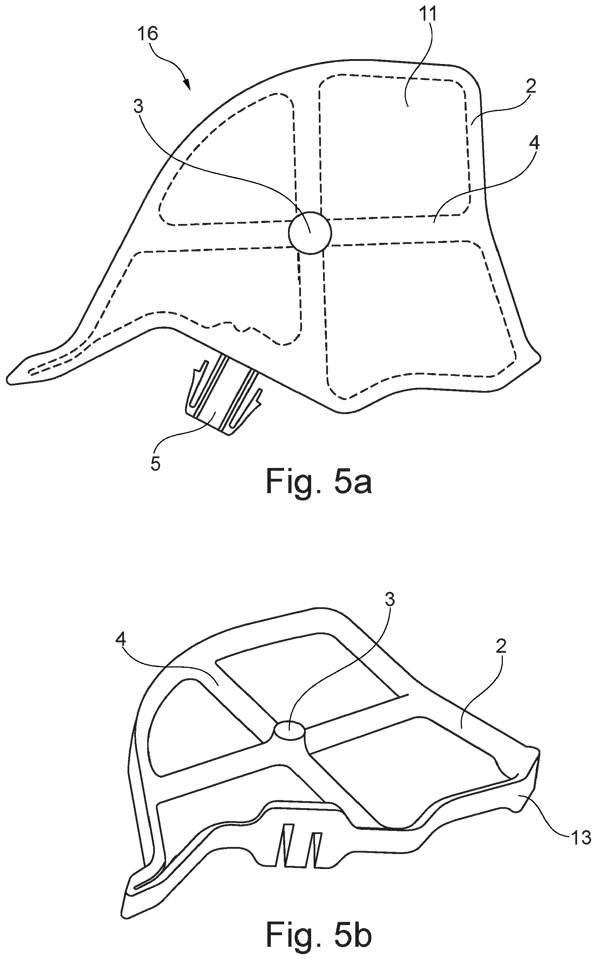

In den Fig. 5a und 5b ist schematisch und beispielhaft eine Variante zur Anbringung des expandierbaren Materials 13 auf dem Trägerelement 11 dargestellt. In Fig. 5a ist ein Dämmelement 16 in Draufsicht dargestellt, und in Fig. 5b ist lediglich eine Innenstruktur des Dämmelementes 16 abgebildet. In diesem Ausführungsbeispiel hat das Dämmelement 16 eine Einfüllöffnung 3 und mehrere Kanäle 4. Dabei kann nun das expandierbare Material 13 durch diese Einfüllöffnung 3 und durch die Kanäle 4 in die Nut 2 des Trägerelementes 11 eingebracht werden. Dadurch wird eine Applikation des expandierbaren Materials 13 vereinfacht, indem eine weniger komplexe räumliche Bewegung des Applikationsroboters notwendig ist.

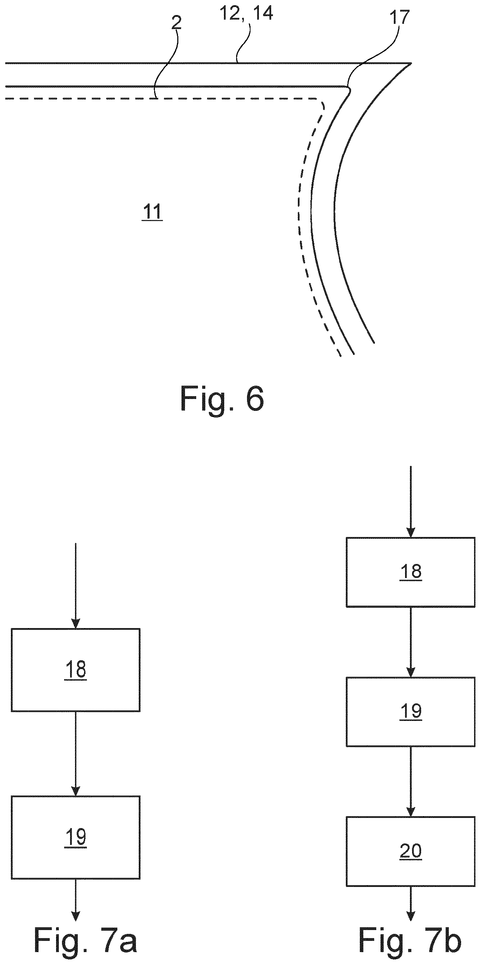

In Fig. 6 ist ein Ausschnitt aus einem Dämmelement in Draufsicht dargestellt. Dabei ist dieses Dämmelement in einem Strukturelement 12, 14 angeordnet. Das Strukturelement 12, 14 hat in diesem Bereich einen spitzen Winkel. Der Träger 11 des Dämmelementes folgt im Wesentlichen einem Querschnitt des Strukturelementes 12, 14, um eine möglichst gute Dämmung des Strukturelementes 12, 14 zu erreichen. Um eine Applikation des expandierbaren Materials in die Nut 2 des Trägerelementes 11 zu vereinfachen, ist eine Nuttiefe im Bereich des spitzen Winkels 17 grösser als in übrigen Bereichen. Dadurch wird eine zu starke Krümmung eines Nutgrundes verhindert, so dass ein Applikationsroboter besser der Nut 2 folgen kann bei einer Anbringung des expandierbaren Materials.

In den Fig. 7a und 7b sind beispielhaft und schematisch mögliche Verfahren zur Herstellung eines Dämmelementes dargestellt. Der Verfahrensschritt 18 betrifft eine additive Fertigung des Trägerelementes, und der Verfahrensschritt 19 entspricht einer Anbringung des expandierbaren Materials auf das Trägerelement. Im Verfahren gemäss Fig. 7b wird zudem ein weiterer Schritt ausgeführt, nämlich Verfahrensschritt 20, welcher einer Anordnung des Befestigungselementes am Trägerelement entspricht.

### Bezugszeichenliste

- 2: Nut
- 3: Einfüllöffnung
- 4: Kanal
- 5: Befestigungselement
- 6: Manipulationselement
- 7: Distanzelement
- 8: erstes Kopplungselement
- 9: zweites Kopplungselement
- 10: Karosserie
- 11: Trägerelement
- 12: Strukturelement
- 13: expandierbares Material
- 13': expandiertes Material
- 14: Strukturelement
- 15: Clip
- 16: Dämmelement
- 17: spitzer Winkel
- 18: Verfahrensschritt additive Fertigung des Trägerelementes
- 19: Verfahrensschritt Anbringung des expandierbaren Materials auf das Trägerelement
- 20: Verfahrensschritt Anordnung des Befestigungselementes am Trägerelement
- 21: Randbereich

## Patentansprüche

1. Verfahren zur Herstellung eines Dämmelementes (16) mit einem Trägerelement (11) und einem expandierbaren Material (13) für die Anwendung in einem Strukturelement (12, 14) eines Fahrzeuges, das Verfahren umfassend die Schritte:
Herstellen des Trägerelementes (11) durch ein additives Fertigungsverfahren, wobei das Trägerelement (11) eine Nut (2) umfasst, welche einen C- oder U-förmigen Querschnitt hat, und wobei diese Nut (2) derart ausgerichtet ist, dass deren offene Seite in einem Verwendungszustand des Dämmelementes (16) gegen eine Wand des Strukturelementes (12, 14) ausgerichtet ist; und
Anbringen des expandierbaren Materials (13) auf das Trägerelement (11), wobei das expandierbare Material (13) zumindest teilweise in der Nut (2) eingebracht wird.

2. Verfahren nach Anspruch 1, wobei das expandierbare Material (13) auf das Trägerelement (11) extrudiert wird.

3. Verfahren nach einem der Ansprüche 1 oder 2, wobei das expandierbare Material (13) durch einen Roboter direkt durch die offene Seite der Nut (2) in die Nut (2) hinein appliziert wird.

4. Verfahren nach einem der Ansprüche 1 oder 2, wobei das expandierbare Material (13) über eine Einfüllöffnung (3) des Trägerelementes (11) und durch Kanäle (4) im Trägerelement (11) in die Nut (2) hinein appliziert wird.

5. Verfahren nach einem der vorhergehenden Ansprüche, wobei das Befestigungselement (5) zur Fixierung des Dämmelementes (16) am Strukturelement (12, 14) am Trägerelement (11) angeordnet wird, nachdem das expandierbare Material (13) auf dem Trägerelement (11) angebracht worden ist.

6. Dämmelement (16) zur Dämmung eines Strukturelementes (12, 14) in einem Fahrzeug, das Dämmelement (16) umfassend:
ein Trägerelement (11), welches durch ein additives Fertigungsverfahren hergestellt ist, wobei das Trägerelement (11) eine Nut (2) umfasst, welche einen C- oder U-förmigen Querschnitt hat, und wobei diese Nut (2) derart ausgerichtet ist, dass deren offene Seite in einem Verwendungszustand des Dämmelementes (16) gegen eine Wand des Strukturelementes (12, 14) ausgerichtet ist; und
ein expandierbares Material (13), welches auf dem Trägerelement (11) angeordnet ist, wobei das expandierbare Material (13) zumindest teilweise in der Nut (2) angeordnet ist.

7. Dämmelement (16) nach Anspruch 6, wobei das Dämmelement (16) ein Befestigungselement (5) zur Fixierung des Dämmelementes (16) am Strukturelement (12, 14) umfasst, wobei das Befestigungselement (5) durch ein Spritzgussverfahren hergestellt ist.

8. Dämmelement (16) nach einem der Ansprüche 6 oder 7, wobei die Nut (2) vollständig um das Befestigungselement (5) herum angeordnet ist, wobei sich die Nut (2) beidseitig des Befestigungselementes (5) verzweigt.

9. Dämmelement (16) nach einem der Ansprüche 6 bis 8, wobei die Nut (2) im Wesentlichen vollständig um das Trägerelement (11) herum angeordnet ist.

10. Dämmelement (16) nach einem der Ansprüche 6 bis 9, wobei die Nut (2) in Bereichen von spitzen Winkeln (17) des Trägerelementes (11) tiefer ausgestaltet ist als in übrigen Bereichen.

11. Dämmelement (16) nach einem der Ansprüche 6 bis 10, wobei das Trägerelement (11) zumindest ein Distanzelement (7) hat, welches der Nut (2) nirgends näher ist als 10 mm.

12. Dämmelement (16) nach Anspruch 11, wobei das Distanzelement (7) an einem Ort des Trägerelementes (11) angeordnet ist, der zumindest 10 mm von einer Kante der Nut (2) beabstandet ist.

13. Dämmelement (16) nach einem der Ansprüche 6 bis 12, wobei das Trägerelement (11) zumindest ein Manipulationselement (6) hat, welches so ausgebildet ist, dass ein Roboter das Trägerelement (11) an diesem Manipulationselement (6) auf vordefinierte Weise fassen kann.

14. Dämmelement (16) nach einem der Ansprüche 6 bis 13, wobei das Dämmelement (16) nach einem Verfahren gemäss einem der Ansprüche 1 bis 5 hergestellt wurde.

15. System mit einem Strukturelement (12, 14) und einem darin angeordneten Dämmelement (16) nach einem der Ansprüche 6 bis 14.
